# EUROPEAN PATENT SPECIFICATION

(11) **EP 4 283 822 B1**
(45) Date of publication and mention of the grant of the patent: **01.07.2026**
(21) Application number: 22920088.6
(22) Date of filing: 29.12.2022
(51) Int. Cl.: H02J 7/42, H02J 7/90, H02H 3/087

(54) **ELECTRONIC DEVICE**
ELEKTRONISCHE VORRICHTUNG
DISPOSITIF ÉLECTRONIQUE

(30) Priority: 11.01.2022 CN 202210023848
(43) Date of publication of application: 29.11.2023
(73) Proprietor: Honor Device Co., Ltd., Shenzhen, Guangdong 518040 (CN)
(72) Inventor: WANG, Xinghua, Shenzhen, Guangdong 518040 (CN); HUANG, Yunchun, Shenzhen, Guangdong 518040 (CN)
(74) Representative: Epping - Hermann - Fischer
(86) International application number: PCT/CN2022/143312
(87) International publication number: WO 2023/134458

(56) References cited:
- CN-A- 103 024 195
- CN-A- 106 549 459
- CN-A- 106 549 459
- CN-A- 111 509 817
- CN-A- 111 817 378
- CN-A- 112 737 566
- CN-A- 114 039 400
- US-A1- 2018 048 170

## Description

### TECHNICAL FIELD

This application relates to the field of charging and discharging technologies, and in particular, to an electronic device.

### BACKGROUND

With the development of a fast charging technology, a voltage at which a battery of an electronic device is charged is getting higher and higher, so a voltage carried by a pin, which is configured to transmit a charging voltage, in a charging interface of the electronic device is getting higher and higher. In an example, if the charging interface is Type-C, a maximum voltage of a current VBUS pin configured to transmit the charging voltage may reach about 20 V.

However, as the voltage carried by the pin increases, breakdown of device components connected to the charging interface in the electronic device also increases accordingly, resulting in damage to components in the electronic device.

CN 106 549 459 A relates to a method for determining charging voltage and a mobile terminal. The method is used for affirming whether a charger is a standard charger which conforms to USB Type-C specifications and charging through default voltage if the charger is affirmed to a nonstandard charger. The detailed technical scheme comprises the following steps that the mobile terminal detects a first voltage value of a pin CC in a universal serial bus USBType-C interface on the mobile terminal when the mobile terminal is charged; and the mobile terminal determines charging voltage for charging the mobile terminal according to the first voltage value. Through adoption of the technical scheme, a problem that high voltage cannot be used to charge the terminal quickly due to a nonstandard cable in the correlation technique is solved, and the mobile terminal can recognize whether the cable is a standard cable and correspondingly determine whether to charge quickly.

### SUMMARY

This application provides an electronic device, which can reduce breakdown of device components connected to a charging interface in the electronic device and reduce damage to components in the electronic device.

The invention is set out in the appended claims. According to a first aspect, an embodiment of this application provides an electronic device, the electronic device including an interface, a voltage detection circuit, and a processor, where
the interface is configured to connect a power supply device, the interface includes a first pin and a second pin, the first pin being configured to transmit a data signal, and the second pin being configured to transmit a charging voltage signal; and the voltage detection circuit is respectively connected to the first pin and the processor, wherein the interface is a Type-C interface, the second pin is a VBUS pin, and the first pin is any data pin in the Type-C interface of SBU1, SBU2, CC1, CC2, TX1+, TX1-, TX2+, TX2-, RX1+, RX1-, RX2+, RX2-, D+, and D-;
the voltage detection circuit is configured to: detect a voltage of the first pin; and
the processor is configured to: determine a second voltage value according to the voltage of the first pin when the power supply device transmits a charging voltage signal with a first voltage value to the second pin and the power supply devices supports fast charging; and send the second voltage value to the power supply device for the power supply device to adjust a voltage value of the charging voltage signal to the second voltage value.

In the electronic device, the second voltage value is determined according to the voltage of the first pin when the power supply device transmits the charging voltage signal with the first voltage value to the second pin and the power supply devices supports fast charging, so as to prevent transmission of a charging voltage signal with an excessive voltage value to the second pin when the first pin and the second pin are short-circuited and then reduce breakdown of a following-stage component of the first pin caused by the excessive voltage value of the charging voltage signal, thereby reducing damage to components in the electronic device.

When determining the second voltage value according to the voltage of the first pin, the processor is further configured to:
determine the second voltage value to be a first value when the voltage of the first pin is no less than a preset first threshold; and
determine the second voltage value to be a second value when the voltage of the first pin is less than the preset first threshold; the first value being less than the second value, the first threshold being less than or equal to the first voltage value and greater than a maximum voltage value of the data signal transmitted by the first pin.

When detecting the voltage of the first pin, the voltage detection circuit is further configured to: compare the voltage of the first pin with the preset first threshold, and send a comparison result to the processor.

The voltage detection circuit includes:
an input terminal of the voltage detection circuit configured to connect the first pin, and an output terminal configured to connect the processor;
where the input terminal of the voltage detection circuit is connected to a first input terminal of a comparator through a fourth resistor, a second input terminal of the comparator is connected to a reference voltage terminal, a voltage at the reference voltage terminal is the first threshold, and an output terminal of the comparator is taken as the output terminal of the voltage detection circuit; and
the comparator is configured to: compare voltages received by the first input terminal and the second input terminal, and output a comparison result.

In a possible implementation, the electronic device further includes a protocol processing circuit, the protocol processing circuit being respectively connected to a third pin of the interface and the processor, the third pin being configured to transmit a data signal; and
when sending the second voltage value to the power supply device, the processor is further configured to:
send the second voltage value to the protocol processing circuit, the protocol processing circuit being configured to: send the second voltage value to the power supply device through the third pin of the interface.

In a possible implementation, the comparator is located in a power management unit (PMU) of the electronic device, or located in the processor.

According to a second aspect, an embodiment of this application provides a charging system, including a power supply device and the above electronic device.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1A is a schematic structural diagram of pins of a Type-C interface;
FIG. 1B is an example diagram of a circuit structure when a VBUS pin and an SBU pin are short-circuited;
FIG. 1C is an example diagram of a circuit structure when a VBUS pin and a D+/D- pin are short-circuited;
FIG. 2 is a schematic diagram of a circuit structure of a charging system in a charging scenario applicable to an electronic device according to this application;
FIG. 3 is a schematic processing flowchart of an embodiment of a processor in an electronic device according to this application;
FIG. 4 is a schematic structural diagram of an embodiment of a voltage detection circuit in an electronic device according to this application;
FIG. 5 is a schematic structural diagram of another embodiment of the voltage detection circuit in the electronic device according to this application;
FIG. 6A is a schematic structural diagram of a third embodiment of the voltage detection circuit in the electronic device according to this application;
FIG. 6B is a schematic structural diagram of a fourth embodiment of the voltage detection circuit in the electronic device according to this application;
FIG. 6C is a schematic structural diagram of a fifth embodiment of the voltage detection circuit in the electronic device according to this application;
FIG. 7 is a schematic structural diagram of a sixth embodiment of the voltage detection circuit in the electronic device according to this application; and
FIG. 8 is a schematic structural diagram of a seventh embodiment of the voltage detection circuit in the electronic device according to this application.

### DESCRIPTION OF EMBODIMENTS

Terms used in implementations of this application are merely intended to explain specific embodiments of this application rather than limit this application.

With the development of a fast charging technology, a voltage at which a battery of an electronic device is charged is getting higher and higher, so a voltage carried by a pin, which is configured to transmit a charging voltage, in a charging interface of the electronic device is getting higher and higher. A current maximum voltage may reach about 20 V.

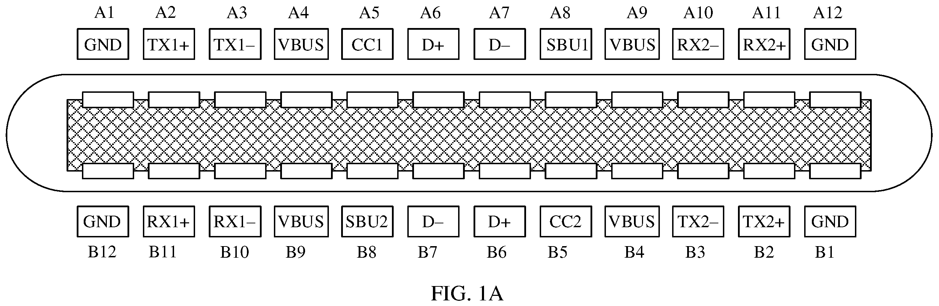

For example, the charging interface is Type-C. FIG. 1A is a schematic structural diagram of pins of a Type-C interface. VBUS pins are pins configured to transmit a charging voltage, and pins such as SBU1, SBU2, CC1, CC2, TX1+, TX1-, TX2+, TX2-, RX1+, RX1-, RX2+, RX2-, D+, and Dare configured to transmit data signals. For the convenience of description, the above pins configured to transmit data signals are collectively referred to as data pins below.

In a normal charging mode (without fast charging), the above VBUS pins transmit a charging voltage generally no greater than 5 V. In a fast charging mode, a maximum transmitted charging voltage may reach about 20 V.

A maximum voltage value of the data signals transmitted by the above data pins is generally below 5 V, and some components of the electronic device that are connected to following stages thereof generally have a withstand voltage of about 6 V.

Under a normal circumstance, the VBUS pins and the data pins in the Type-C interface transmit signals independently of each other. Therefore, when the data pins normally transmit data signals, components connected to following stages thereof (hereinafter referred to as following-stage components) generally may not be damaged due to breakdown.

However, in some scenarios, short circuiting may occur between the VBUS pins and other data pins in the Type-C interface. For example, the VBUS pins and/or the data pins (for example, CC1 pins, TX1- pins, and the like) in the Type-C interface may tilt, causing short circuiting between the VBUS pins and adjacent data pins. Alternatively, an abnormal condition such as liquid or a foreign matter entering the Type-C interface causes short circuiting between one or more data pins and the VBUS pins in the Type-C interface.

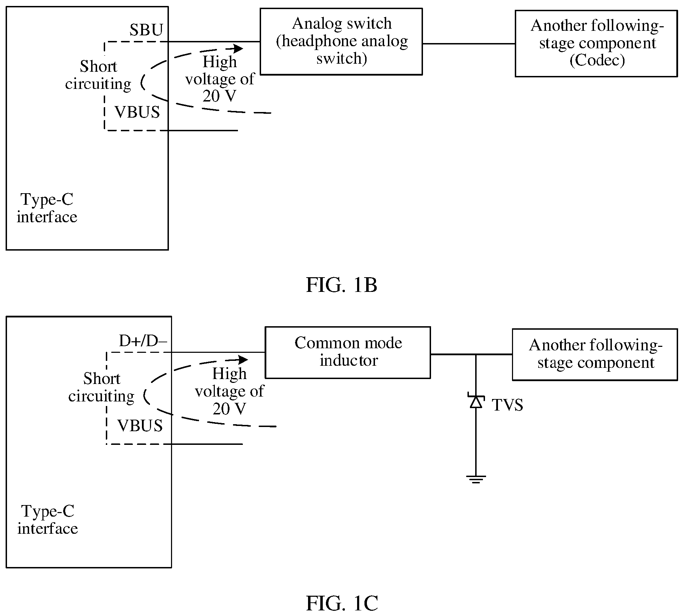

In this case, if withstand voltages of following-stage components connected to the data pins short-circuited to the VBUS pins are lower than the charging voltage transmitted by the VBUS pins, the following-stage components may be broken down, resulting in damage to the following-stage components. For example, referring to FIG. 1B, a maximum voltage of a charging voltage transmitted by a VBUS pin is about 20 V, and a withstand voltage of an analog switch (such as a headphone analog switch) connected to an SBU pin of the Type-C interface is only 6 V. When the VBUS pin and the SBU pin are short-circuited due to a problem such as liquid ingress or a foreign matter on the Type-C interface, a high voltage of 20 V on the VBUS pin can break down the analog switch, causing failure of the analog switch. In addition, the high voltage may also lead to failure of another following-stage component (such as Codec) connected to a following stage after the breakdown of the analog switch. As shown in FIG. 1C, a data pin D+/D- of the Type-C interface is connected to a common mode inductor in a following stage. The common mode inductor has channel impedance of about 3 ohms, a through-current capability of 100 mA, a peak value of 500 mA, and a mainboard following-stage TVS clamping voltage of 8.5 V. When the VBUS pin and the data pin D+/D- are short-circuited and the voltage transmitted by the VBUS pin reaches a high voltage of 20 V, the high voltage may cause the common mode inductor to be blown due to overcurrent, and may even cause the Type-C interface to be unusable.

To this end, this application provides an electronic device, which can reduce breakdown of device components connected to a charging interface in the electronic device and reduce damage to components in the electronic device.

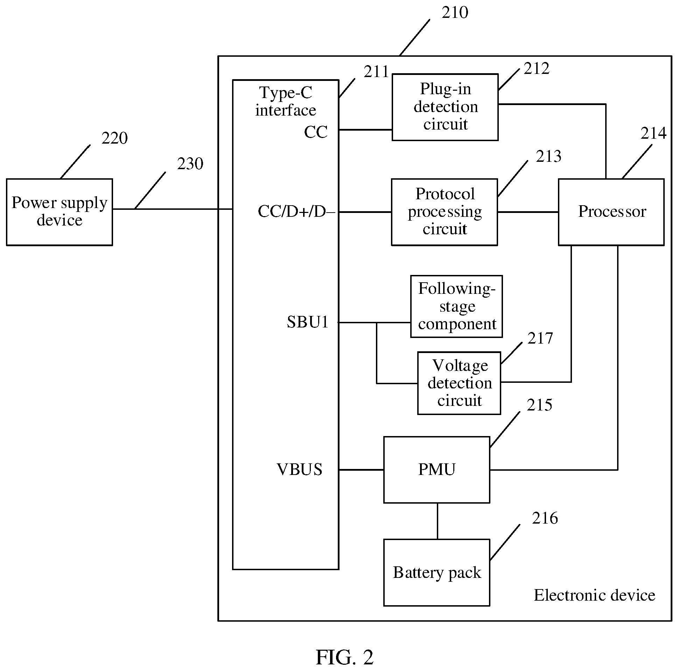

FIG. 2 is a schematic diagram of a circuit structure of a charging system circuit in a charging scenario according to an embodiment of this application. The electronic device in this embodiment of this application will be illustrated below in conjunction with the circuit structure of the charging system in the charging scenario.

As shown in FIG. 2, the charging system may include: an electronic device 210, a power supply device 220, and a charging cable 230. The power supply device may be a charging head or another device capable of charging the electronic device. The electronic device 210 and the power supply device 220 are connected through the charging cable 230. The charging cable 230 is specifically connected to the electronic device through a Type-C interface. A manner in which the electronic device is charged by the power supply device through the charging cable may be called direct charging or cable charging.

The electronic device 210 may include: a Type-C interface 211, a plug-in detection circuit 212, a protocol processing circuit 213, a processor 214, a power management unit (power management unit, PMU) 215, a battery pack 216, and a voltage detection circuit 217.

The plug-in detection circuit 212 is respectively connected to a CC pin of the Type-C interface 211 and the processor 214. The plug-in detection circuit 212 is configured to detect, by detecting a voltage of the CC pin for example, whether a plug of the charging cable is plugged into the Type-C interface 211 of the electronic device, and send a first signal to the processor 214 when detecting that the plug of the charging cable is plugged into the Type-C interface 211 of the electronic device, to notify the processor 214 that the plug of the charging cable is plugged into the Type-C interface 211 of the electronic device. The plug-in detection circuit may be implemented by a related Type-C interface hot plug detection technology. A specific circuit implementation structure is not described in detail herein.

The protocol processing circuit 213 is respectively connected to a CC/D+/D- pin of the Type-C interface 211 and the processor 214. The protocol processing circuit 213 is configured to communicate with the power supply device 220 through a charging protocol such as a USB Power Delivery (USB Power Delivery, USB-PD) protocol, and complete a communication negotiation process with the power supply device 220 based on the charging protocol. The communication between the protocol processing circuit 213 and the power supply device 220 may be triggered by the processor 214. Optionally, data communication may be performed between the protocol processing circuit 213 and the processor 214 through an I2C interface. The protocol processing circuit 213 may be implemented by using a related charging protocol processing chip. A specific circuit implementation structure is not described in detail herein.

The PMU 215 is respectively connected to the VBUS pin of the Type-C interface 211, the processor 214, and the battery pack 216. The PMU 215 is configured to supply power to a power-consuming circuit in the electronic device 210 such as the processor 214 according to a charging voltage signal received from the VBUS pin, and the PMU 215 may be configured to charge the battery pack 216 of the electronic device according to the charging voltage signal. The PMU 215 may be implemented by using a related PMU chip. A specific circuit implementation structure is not described in detail herein.

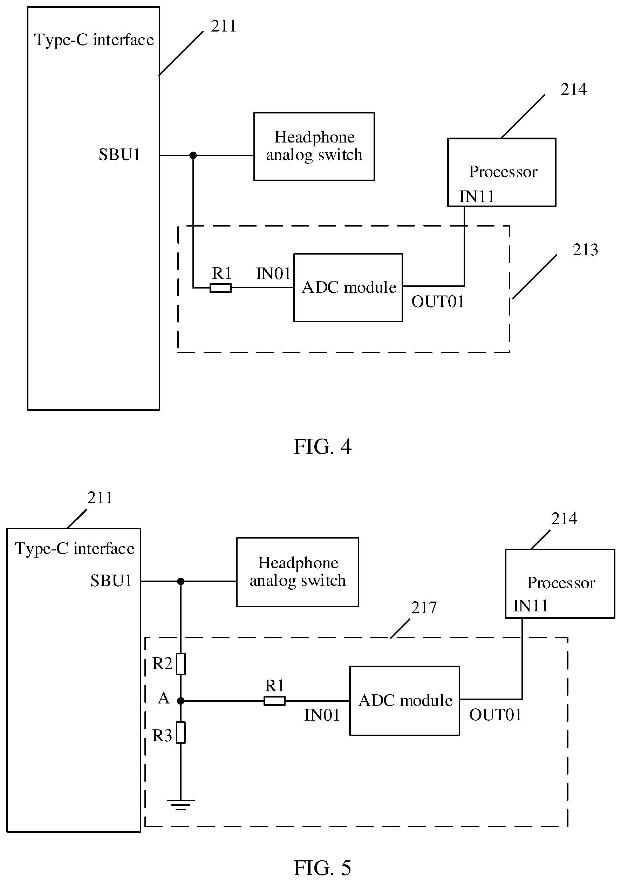

The voltage detection circuit 217 is respectively connected to a target pin (the SBU1 pin is taken as an example in FIG. 2) of the Type-C interface 211 and the processor 214. The voltage detection circuit 217 is configured to detect a voltage of the target pin and send a detection result to the processor 214. A specific implementation structure of the voltage detection circuit 217 is described more specifically hereinafter with reference to FIG. 4 to FIG. 8. Details are not described herein. An operating principle of the circuit shown in FIG. 2 is illustrated:
Step S1: The plug-in detection circuit 212 detects whether a plug of the charging cable is plugged into the Type-C interface 211 of the electronic device. The plug-in detection circuit 212 sends a first signal to the processor 214 if the plug-in detection circuit 212 detects that the plug of the charging cable is plugged into the Type-C interface 211 of the electronic device 210. The first signal is used for indicating the processor 214 that the plug of the charging cable is plugged into the Type-C interface of the electronic device.

Step S2: The processor 214 sends a second signal to the protocol processing circuit 213 in response to the first signal. The second signal is used for instructing the protocol processing circuit 213 to communicate with the power supply device 220.

Step S3: The protocol processing circuit 213 communicates, in response to the second signal, with the power supply device 220 through a charging protocol such as a USB Power Delivery (USB Power Delivery, USB-PD) protocol, and completes a communication negotiation process with the power supply device 220 based on the charging protocol. As shown in FIG. 2, communication data between the protocol processing circuit 213 and the power supply device 220 may be transmitted through data transmission lines corresponding to a data pin (such as a CC1 pin, a CC2 pin, a D+ pin, or a D-pin) of the Type-C interface 211 and a data pin in the charging cable 230.

Step S4: After the communication between the protocol processing circuit 213 and the power supply device 220 is completed, the power supply device 220 starts to output, through the charging cable, a charging voltage signal to the electronic device 210 via the charging cable 230 and the VBUS pin of the Type-C interface 211. A voltage value of the charging voltage signal is generally the charging voltage value in the normal charging mode supported by the power supply device 220, which may be, for example, 5 V.

The charging voltage signal is specifically transmitted to the PMU 215 of the electronic device 210. The PMU 215 may supply power to the power-consuming circuit in the electronic device 210 such as the processor 214 according to the charging voltage signal, and the PMU 215 may charge the battery pack 216 of the electronic device according to the charging voltage signal. Moreover, after the communication between the protocol processing circuit 213 and the power supply device 220 is completed, the protocol processing circuit 213 obtains charging-related information such as a power supply capability of the power supply device 220, and the protocol processing circuit 213 sends the charging-related information to the processor 214. The power supply capability may include: whether to support fast charging.

Step S5: The voltage detection circuit 217 detects the voltage of the target pin (for example, the target pin is the SBU1 pin in FIG. 2) in the Type-C interface 211, and sends the detected voltage to the processor 214.

Optionally, the voltage detection circuit 217 may be enabled and controlled by the processor 214. Specifically, the processor 214 may send a first enable signal to the voltage detection circuit 217 after determining, according to the power supply capability of the power supply device 220, that the power supply device 220 supports fast charging, so as to control the voltage detection circuit 217 to start to detect the voltage of the target pin in the Type-C interface 211.

Step S6: The processor 214 determines a charging voltage expected value for this charging according to the power supply capability of the power supply device 220 and the voltage of the target pin detected by the voltage detection circuit 217, and sends the determined charging voltage expected value to the protocol processing circuit 213, which is then sent to the power supply device 220 by the protocol processing circuit 213 via the data pin of the Type-C interface 211 and the charging cable 230.

The charging voltage expected value may be the charging voltage value in the normal charging mode supported by the power supply device 220 (that is, a charging voltage value during non-fast charging), such as 5 V, or the charging voltage value of fast charging supported by the power supply device 220, such as 20 V.

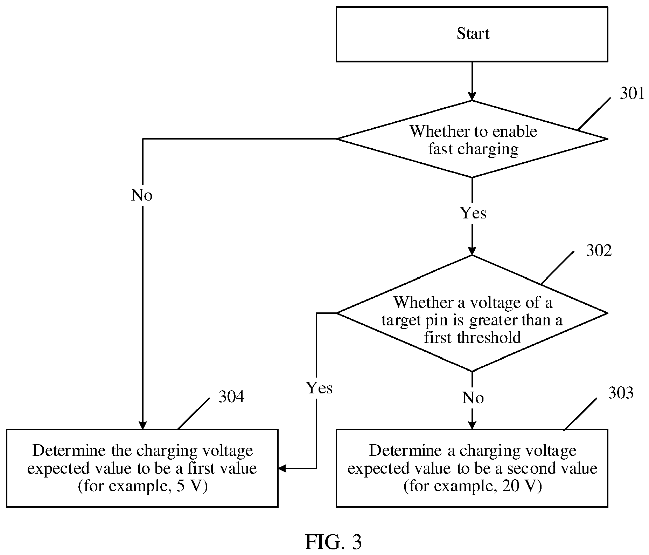

In this step, a specific implementation in which the processor 214 determines the charging voltage expected value for this charging according to the power supply capability of the power supply device 220 and the voltage of the target pin is described more specifically hereinafter with reference to FIG. 3. Details are not described herein.

Optionally, the processor 214, after determining the charging voltage expected value for this charging, may send a second enable signal to the voltage detection circuit 217, so as to control the voltage detection circuit 217 to stop detecting the voltage of the target pin in the Type-C interface 211.

Step S7: The power supply device 220 adjusts, according to the charging voltage expected value indicated by the electronic device 210, a voltage value of the charging voltage signal transmitted to the VBUS pin of the electronic device 210.

After the voltage value of the charging voltage signal is adjusted to the charging voltage expected value, the charging voltage signal of the power supply device 220 is still transmitted to the PMU 215 of the electronic device 210 via the charging cable 230 and the VBUS pin of the Type-C interface 211. The PMU 215 may supply power to the power-consuming circuit in the electronic device 210 such as the processor 214 according to the charging voltage signal, and the PMU 215 may charge the battery pack 216 of the electronic device according to the charging voltage signal. An implementation in which the processor 214 determines the charging voltage expected value for this charging according to the power supply capability of the power supply device 220 and the voltage of the target pin in step S6 is specifically described below through the flowchart shown in FIG. 3.

Step 301: The processor 214 determines, according to the power supply capability of the power supply device 220, whether the power supply device 220 supports fast charging. Step 302 is performed if fast charging is supported. Step 304 is performed if fast charging is not supported. In this step, a situation where the power supply device 220 supports fast charging can be screened out by determining whether the power supply device 220 supports fast charging, so as to further screen out short circuiting between the VBUS pin and the target pin in subsequent step 302.

Step 302: Acquire the voltage of the target pin, determine whether the voltage of the target pin is greater than a preset first threshold, and if yes, perform step 304; and if not, perform step 303.

Optionally, the first threshold may be greater than a maximum voltage value (for example, 3.3 V) of a data signal transmitted by the target pin, and less than or equal to an initial voltage value (for example, 5 V) of the charging voltage signal when the power supply device 220 charges the electronic device 210.

**In** this step, whether short circuiting occurs between the target pin and the VBUS pin is determined by determining whether the voltage of the target pin is greater than the preset first threshold. This is because: if short circuiting occurs between the target pin and the VBUS pin, the voltage of the target pin should be equal to the voltage value of the charging voltage signal in step S4. When the voltage value is greater than the maximum voltage value of the data signal transmitted by the target pin, in other words, if the voltage of the target pin is greater than the maximum voltage value of the data signal transmitted by the target pin, it indicates that short circuiting occurs between the target pin and the VBUS pin.

Through the judgment in this step, a situation where the power supply device 220 supports fast charging and the target pin and the VBUS pin are not short-circuited and a situation where the power supply device 220 supports fast charging but the target pin and the VBUS pin are short-circuited can be screened out.

Step 303: Determine a charging voltage expected value to be a second value, where the second value may be the voltage value of the charging voltage signal in the fast charging mode.

This step is performed after it is determined in step 301 that the power supply device 220 supports fast charging and it is determined in step 302 that the voltage of the target pin is no greater than the preset first threshold, that is, performed in the situation where the power supply device 220 supports fast charging and the target pin and the VBUS pin are not short-circuited. Charging efficiency of the electronic device can be improved by determining the charging voltage expected value to be the second value, for example, the voltage value in the fast charging mode.

Step 304: Determine the charging voltage expected value to be a first value, where the first value may be the voltage value of the charging voltage signal in the normal charging mode.

This step may be performed after it is determined in step 301 that the power supply device 220 does not support fast charging. Since the power supply device 220 does not support fast charging, the charging voltage expected value can only be determined to be the first value, that is, the voltage value in the normal charging mode. Alternatively, this step may be performed after it is determined in step 301 that the power supply device 220 supports fast charging and it is determined in step 302 that the voltage of the target pin is greater than the preset first threshold, that is, performed in the situation where the power supply device 220 supports fast charging but the target pin and the VBUS pin are short-circuited. The voltage value of the charging voltage signal can be ensured to be no greater than a withstand voltage of a following-stage component of the target pin by determining the charging voltage expected value to be the first value, for example, the voltage value in the normal charging mode, thereby ensuring that the charging voltage signal may not cause damage to the following-stage component of the target pin.

Next, a circuit implementation structure of the voltage detection circuit 217 in the above embodiment is illustrated with reference to FIG. 4 to FIG. 8. It should be noted that FIG. 4 to FIG. 8 show only circuit structures such as the Type-C interface 211 and the processor 214 associated with the voltage detection circuit 217, omit circuit structures such as the plug-in detection circuit 212 and the protocol processing circuit 213 shown in FIG. 3, and are not intended to limit specific implementation of the electronic device in the embodiments of this application.

FIG. 4 is a schematic diagram of an implementation structure of a voltage detection circuit according to an embodiment of this application. FIG. 4 is based on an example in which the target pin is the SBU1 pin and a following-stage component connected to the SBU1 pin is the headphone analog switch. It should be noted that in practical applications, specific following-stage components in the electronic device that are connected to the SBU1 pin are not limited in this embodiment of this application.

Referring to FIG. 4, the voltage detection circuit 217 of the SBU1 pin may include:
the SBU1 pin of the Type-C interface 211 being connected to a first signal input terminal IN01 of an analog-to-digital converter (ADC) module through a first resistor R1, and a first output terminal OUT01 of the ADC module being connected to a first input terminal IN11 of the processor.

The ADC module is configured to convert an analog voltage signal received by the first signal input terminal IN01 into a digital voltage signal and output the digital voltage signal to the processor 214 through the first output terminal OUT01.

An operating principle of the voltage detection circuit shown in FIG. 4 is described as follows:
The SBU1 pin is connected to the signal input terminal IN01 of the ADC module through the first resistor R1, so that the signal input terminal IN01 of the ADC module can detect a voltage signal of the SBU1 pin. The voltage signal is an analog voltage signal. The ADC module converts the detected analog voltage signal of the SBU1 pin into a digital voltage signal and then may transmit the digital voltage signal to the processor 214.

FIG. 5 is a schematic diagram of a second implementation structure of the voltage detection circuit according to an embodiment of this application. FIG. 5 is still based on the example in which the target pin is the SBU1 pin and the following-stage component connected to the SBU1 pin is the headphone analog switch. The voltage detection circuit shown in FIG. 5 is mainly different from the voltage detection circuit shown in FIG. 4 in that: the SBU1 pin of the Type-C interface 211 is grounded through a second resistor R2 and a third resistor R3 connected in series, and a connection terminal A of the second resistor R2 and the third resistor R3 is connected to the first signal input terminal IN01 of the ADC module through the first resistor R1.

An operating principle of the voltage detection circuit shown in FIG. 5 is described as follows:
The second resistor R2 and the third resistor R3 divide a voltage of the SBU1 pin, so that a voltage detected by the first signal input terminal IN01 of the ADC module is a voltage division signal of the SBU1 pin; and the ADC module converts the detected voltage division signal of the SBU1 pin into a digital voltage signal and then may transmit the digital voltage signal to the processor 214. When resistance values of the second resistor R2 and the third resistor R3 are specified, the processor 214 may calculate a digital voltage signal of the SBU1 pin based on a digital voltage signal.

In the voltage detection circuit shown in FIG. 5, a detection range of the ADC module may be less than the above first threshold. The analog voltage signal inputted to the ADC module may be in line with the detection range of the ADC module by adjusting voltage values of the second resistor R2 and the third resistor R3, thereby improving detection accuracy of the ADC module.

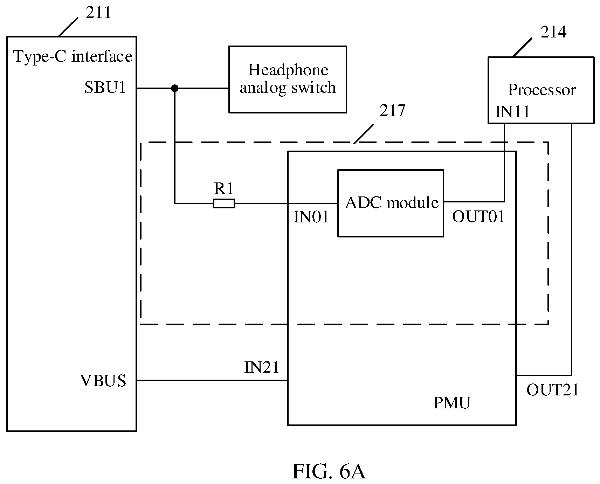

Many devices of the electronic device are provided with ADC modules. For example, a processor chip, a PMU chip, and the like in the electronic device are provided with ADC modules. Therefore, to reduce occupation of a PCB area by the voltage detection circuit, an existing ADC module in the electronic device may be reused as the ADC module in the voltage detection circuit shown in FIG. 4 and FIG. 5 above. Therefore, only wiring needs to be added to a PCB, and there is no need to add a new ADC module, so that the voltage detection circuit occupies a smaller PCB area. The existing ADC module in the above electronic device may be an ADC module disposed separately, or an ADC module included in an existing device (such as the PMU or the processor). The above existing device may be a device in a circuit branch connected to the target pin, or a device other than the circuit branch connected to the target pin. An implementation structure of the voltage detection circuit when an existing ADC module is used as the ADC module in the voltage detection circuit is illustrated below with reference to FIG. 6A to FIG. 6B.

FIG. 6A is a schematic diagram of a third implementation structure of the voltage detection circuit according to an embodiment of this application. For example, the ADC module in the voltage detection circuit shown in FIG. 4 is an existing ADC module in the PMU 215.

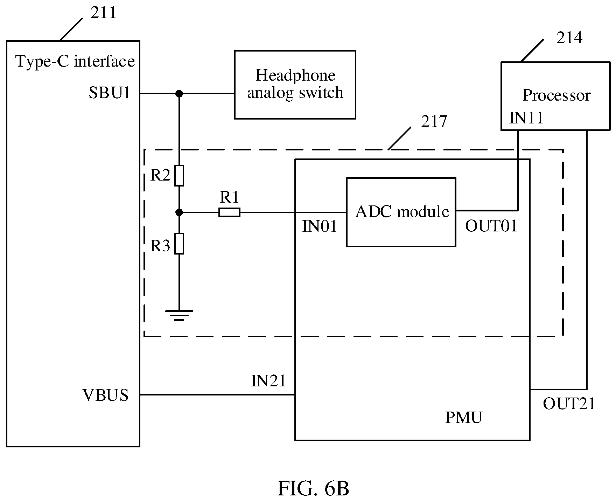

FIG. 6B is a schematic diagram of a fourth implementation structure of the voltage detection circuit according to an embodiment of this application. For example, the ADC module in the voltage detection circuit shown in FIG. 5 is an existing ADC module in the PMU 215.

Connection relationships and operating principles of the circuits in FIG. 6A and FIG. 6B above may be obtained with reference to the corresponding descriptions in FIG. 4 and FIG. 5. Details are not described herein.

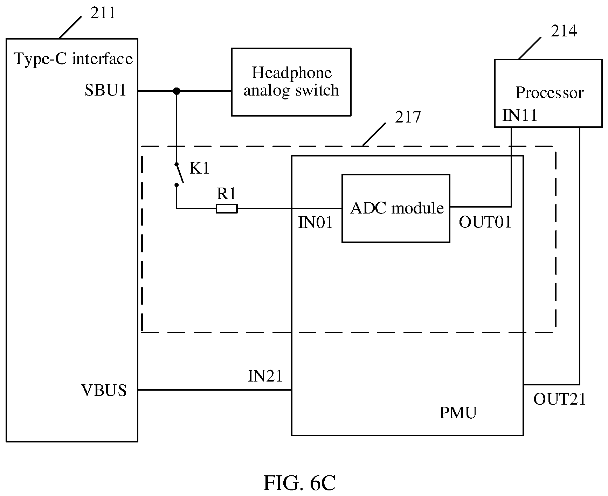

If the ADC module included in the voltage detection circuit is the existing ADC module in the electronic device, the voltage detection circuit may reuse the first signal input terminal IN01 of the ADC module with another existing device. In this case, a switch may be disposed in a branch where the first resistor R1 and the ADC module are located, and the processor only gates the switch when needing to detect the voltage of the target pin. FIG. 6C is taken as an example for illustration below.

FIG. 6C is a schematic diagram of a fifth implementation structure of the voltage detection circuit according to an embodiment of this application. For example, the above switch is added to the voltage detection circuit shown in FIG. 6A. As shown in FIG. 6C, a first switch K1 is added between the SBU1 pin and the first resistor R1, a control terminal of the first switch K1 may be connected to the processor 214, and the processor 214 controls the first switch K1 to be on when needing to obtain the voltage of the SBU1 pin and controls the first switch K1 to be off at other times.

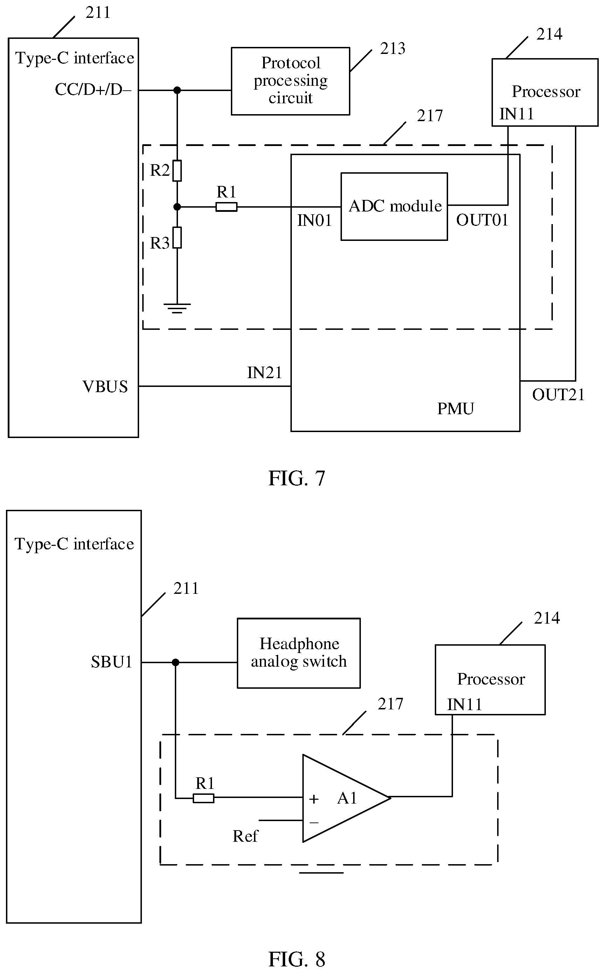

In the above example of the implementation structure of the voltage detection circuit, the target pin is the SBU1 pin. The target pin may alternatively be any other pin for data transmission in the Type-C interface, such as CC1, CC2, SBU2, D+, or D-. Illustration is provided below with reference to FIG. 7.

FIG. 7 is a schematic diagram of a sixth implementation structure of the voltage detection circuit according to an embodiment of this application, based on an example in which the target pin in the circuit shown in FIG. 5 is replaced with another pin. Referring to FIG. 7, a difference from the circuit shown in FIG. 5 only lies in that: the target pin is replaced from the SBU1 pin to the CC1 or D+ or D- pin. Correspondingly, for example, the following-stage component of the target pin is the protocol processing circuit 213 (such as a PD/SOC/protocol IC).

In another circuit implementation structure of the voltage detection circuit provided in this embodiment of this application, the above ADC module may be replaced with a comparator, a logic gate, or the like, or the voltage detection circuit may also reuse an IO pin of the SOC and detect the voltage of the target pin by detecting high and low levels through the IO pin. In the above manner, a smaller area of the PCB is also occupied. Illustration is provided below with reference to FIG. 8.

FIG. 8 is a schematic diagram of a seventh implementation structure of the voltage detection circuit according to an embodiment of this application, based on an example in which the ADC module in the voltage detection circuit shown in FIG. 4 is replaced with a comparator. Referring to FIG. 8, the voltage detection circuit may include:
a comparator A1 having a positive input terminal connected to the SBU1 pin of the Type-C interface through the first resistor R1, a negative input terminal receiving a reference voltage signal, and an output terminal connected to the processor 214.

The comparator A1 is configured to: output a high-level signal through the output terminal when a voltage at the positive input terminal is higher than a voltage at the negative input terminal, and output a low-level signal through the output terminal when the voltage at the positive input terminal is no higher than the voltage at the negative input terminal.

An operating principle of the voltage detection circuit shown in FIG. 8 is described as follows:
The positive input terminal of the comparator A1 may detect the voltage of the SBU1 pin, and a voltage value of the reference voltage signal at the negative input terminal may be a first threshold, so that the comparator A1 can compare the voltage of the SBU1 pin with a voltage of the reference voltage signal, and send a comparison result to the processor 214 through the outputted high-level signal or low-level signal.

Therefore, the processor can know, according to the received high-level signal or low-level signal, whether the voltage of the SBU1 pin is higher than the preset first threshold. **In** this case, the voltage detection circuit may be further configured to: compare the voltage of the first pin with the preset first threshold, and send a comparison result to the processor. Correspondingly, the processor may determine the above expected voltage value according to the comparison result. The above embodiments are based on an example in which the charging interface of the electronic device is a Type-C interface. It is to be noted that, the charging interface of the electronic device in the embodiments of this application may alternatively be another charging interface including a charging voltage signal transmission pin and a data pin other than the Type-C interface, such as another USB interface or a Lightning interface other than the Type-C interface, which is not limited in the embodiments of this application.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. An electronic device (210), wherein the electronic device (210) comprises an interface (211), a voltage detection circuit (217), and a processor (214), wherein
the interface (211) is configured to connect a power supply device (220); the interface (211) comprises a first pin and a second pin, the first pin being configured to transmit a data signal, and the second pin being configured to transmit a charging voltage signal, wherein the interface (211) is a Type-C interface, the second pin is a VBUS pin, and the first pin is any data pin in the Type-C interface of SBU1, SBU2, CC1, CC2, TX1+, TX1-, TX2+, TX2-, RX1+, RX1-, RX2+, RX2-, D+, and D-; and
the voltage detection circuit (217) is respectively connected to the first pin and the processor (214);
the voltage detection circuit (217) is configured to: detect a voltage of the first pin; and
the processor (214) is configured to:
determine a second voltage value according to the voltage of the first pin when the power supply device (220) transmits a charging voltage signal with a first voltage value to the second pin and the power supply device (220) supports fast charging; and
send the second voltage value to the power supply device (220) for the power supply device (220) to adjust a voltage value of the charging voltage signal to the second voltage value; wherein when determining the second voltage value according to the voltage of the first pin, the processor is further configured to:
determine the second voltage value to be a first value when the voltage of the first pin is no less than a preset first threshold; and
determine the second voltage value to be a second value when the voltage of the first pin is less than the preset first threshold; the first value being less than the second value, the first preset threshold being less than or equal to the first voltage value and greater than a maximum voltage value of the data signal transmitted by the first pin,
wherein when detecting the voltage of the first pin, the voltage detection circuit (217) is further configured to:
compare the voltage of the first pin with the preset first threshold, and send a comparison result to the processor (214),
wherein the voltage detection circuit (217) comprises:
an input terminal of the voltage detection circuit (217) configured to connect the first pin, and an output terminal configured to connect the processor (214);
wherein the input terminal (IN01) of the voltage detection circuit (217) is connected to a first input terminal of a comparator through a fourth resistor, a second input terminal of the comparator is connected to a reference voltage terminal, a voltage at the reference voltage terminal is the preset first threshold, and an output terminal of the comparator is taken as the output terminal of the voltage detection circuit (217); and
the comparator is configured to: compare voltages received by the first input terminal and the second input terminal, and output the comparison result.

2. The electronic device according to claim 1, wherein the electronic device (210) further comprises a protocol processing circuit (213), the protocol processing circuit (213) being respectively connected to a third pin of the interface (211) and the processor (214), the third pin being configured to transmit a data signal; and
when sending the second voltage value to the power supply device (220), the processor (214) is further configured to: send the second voltage value to the protocol processing circuit (213);
the protocol processing circuit (213) being configured to: send the second voltage value to the power supply device (220) through the third pin of the interface (211).

3. The electronic device (210) according to claim 1, wherein the comparator is located in a power management unit, PMU, (215) of the electronic device (210), or located in the processor (214).

4. A charging system, comprising a power supply device (220) and the electronic device (210) according to any one of claims 1 to 3.

## Patentansprüche

1. Elektronische Vorrichtung (210), wobei die elektronische Vorrichtung (210) eine Schnittstelle (211), eine Spannungserkennungsschaltung (217) und einen Prozessor (214) umfasst, wobei
die Schnittstelle (211) dazu konfiguriert ist, eine Stromversorgungsvorrichtung (220) anzuschließen; wobei die Schnittstelle (211) einen ersten Pin und einen zweiten Pin umfasst, wobei der erste Pin dazu konfiguriert ist, ein Datensignal zu übertragen, und der zweite Pin dazu konfiguriert ist, ein Ladespannungssignal zu übertragen, wobei die Schnittstelle (211) eine Typ-C-Schnittstelle ist, der zweite Pin ein VBUS-Pin ist und der erste Pin ein beliebiger Datenpin in der Typ-C-Schnittstelle aus SBU1, SBU2, CC1, CC2, TX1+, TX1-, TX2+, TX2-, RX1+, RX1-, RX2+, RX2-, D+ und D- ist; und
die Spannungserkennungsschaltung (217) jeweils mit dem ersten Pin und dem Prozessor (214) verbunden ist;
die Spannungserkennungsschaltung (217) dazu konfiguriert ist: eine Spannung des ersten Pins zu erfassen; und
der Prozessor (214) dazu konfiguriert ist:
einen zweiten Spannungswert gemäß der Spannung des ersten Pins zu bestimmen, wenn die Stromversorgungsvorrichtung (220) ein Ladespannungssignal mit einem ersten Spannungswert an den zweiten Pin überträgt und die Stromversorgungsvorrichtung (220) Schnellladen unterstützt; und
den zweiten Spannungswert an die Stromversorgungsvorrichtung (220) zu senden, damit die Stromversorgungsvorrichtung (220) einen Spannungswert des Ladespannungssignals auf den zweiten Spannungswert einstellt; wobei der Prozessor beim Bestimmen des zweiten Spannungswerts gemäß der Spannung des ersten Pins ferner dazu konfiguriert ist:
den zweiten Spannungswert als einen ersten Wert zu bestimmen, wenn die Spannung des ersten Pins nicht weniger als einen voreingestellten ersten Schwellenwert beträgt; und
den zweiten Spannungswert als einen zweiten Wert zu bestimmen, wenn die Spannung des ersten Pins geringer als der voreingestellte erste Schwellenwert ist; wobei der erste Wert kleiner als der zweite Wert ist, der erste voreingestellte Schwellenwert kleiner oder gleich dem ersten Spannungswert und größer als ein maximaler Spannungswert des vom ersten Pin übertragenen Datensignals ist,
wobei beim Erfassen der Spannung des ersten Pins die Spannungserkennungsschaltung (217) ferner dazu konfiguriert ist:
die Spannung des ersten Pins mit dem voreingestellten ersten Schwellenwert zu vergleichen und ein Vergleichsergebnis an den Prozessor (214) zu senden,
wobei die Spannungserkennungsschaltung (217) umfasst:
einen Eingangsanschluss der Spannungserkennungsschaltung (217), der dazu konfiguriert ist, den ersten Pin anzuschließen, und einen Ausgangsanschluss, der dazu konfiguriert ist, den Prozessor (214) anzuschließen;
wobei der Eingangsanschluss (IN01) der Spannungserfassungsschaltung (217) über einen vierten Widerstand mit einem ersten Eingangsanschluss eines Komparators verbunden ist, ein zweiter Eingangsanschluss des Komparators mit einem Referenzspannungsanschluss verbunden ist, eine Spannung am Referenzspannungsanschluss der voreingestellte erste Schwellenwert ist und ein Ausgangsanschluss des Komparators als der Ausgangsanschluss der Spannungserfassungsschaltung (217) dient; und
der Komparator dazu konfiguriert ist: die durch den ersten Eingangsanschluss und den zweiten Eingangsanschluss empfangenen Spannungen zu vergleichen und das Vergleichsergebnis auszugeben.

2. Elektronische Vorrichtung nach Anspruch 1, wobei die elektronische Vorrichtung (210) ferner eine Protokollverarbeitungsschaltung (213) umfasst, wobei die Protokollverarbeitungsschaltung (213) jeweils mit einem dritten Pin der Schnittstelle (211) und dem Prozessor (214) verbunden ist, wobei der dritte Pin dazu konfiguriert ist, ein Datensignal zu übertragen; und
wobei der Prozessor (214) beim Senden des zweiten Spannungswerts an die Stromversorgungsvorrichtung (220) ferner dazu konfiguriert ist: den zweiten Spannungswert an die Protokollverarbeitungsschaltung (213) zu senden;
wobei die Protokollverarbeitungsschaltung (213) dazu konfiguriert ist: den zweiten Spannungswert über den dritten Pin der Schnittstelle (211) an die Stromversorgungsvorrichtung (220) zu senden.

3. Elektronische Vorrichtung (210) nach Anspruch 1, wobei der Komparator in einer Energieverwaltungseinheit, PMU, (215) der elektronischen Vorrichtung (210) oder im Prozessor (214) angeordnet ist.

4. Ladesystem, umfassend eine Stromversorgungsvorrichtung (220) und die elektronische Vorrichtung (210) nach einem der Ansprüche 1 bis 3.

## Revendications

1. Dispositif électronique (210), dans lequel le dispositif électronique (210) comprend une interface (211), un circuit de détection de tension (217) et un processeur (214), dans lequel
l'interface (211) est configurée pour connecter un dispositif d'alimentation (220) ; l'interface (211) comprend une première broche et une seconde broche, la première broche étant configurée pour transmettre un signal de données, et la seconde broche étant configurée pour transmettre un signal de tension de charge, dans lequel l'interface (211) est une interface de type C, la seconde broche est une broche VBUS, et la première broche est n'importe quelle broche de données dans l'interface de type C parmi SBU1, SBU2, CC1, CC2, TX1+, TX1-, TX2+, TX2-, RX1+, RX1-, RX2+, RX2-, D+ et D- ; et
le circuit de détection de tension (217) est respectivement connecté à la première broche et au processeur (214) ;
le circuit de détection de tension (217) est configuré pour : détecter une tension de la première broche ; et
le processeur (214) est configuré pour :
déterminer une seconde valeur de tension en fonction de la tension de la première broche lorsque le dispositif d'alimentation (220) transmet un signal de tension de charge avec une première valeur de tension à la seconde broche et que le dispositif d'alimentation (220) prend en charge la charge rapide ; et
envoyer la seconde valeur de tension au dispositif d'alimentation (220) pour que le dispositif d'alimentation (220) ajuste une valeur de tension du signal de tension de charge à la seconde valeur de tension ; dans lequel lors de la détermination de la seconde valeur de tension en fonction de la tension de la première broche, le processeur est en outre configuré pour :
déterminer la seconde valeur de tension comme étant une première valeur lorsque la tension de la première broche n'est pas inférieure à un premier seuil prédéfini ; et
déterminer la seconde valeur de tension comme étant une seconde valeur lorsque la tension de la première broche est inférieure au premier seuil prédéfini ; la première valeur étant inférieure à la seconde valeur, le premier seuil prédéfini étant inférieur ou égal à la première valeur de tension et supérieur à une valeur de tension maximale du signal de données transmis par la première broche,
dans lequel lors de la détection de la tension de la première broche, le circuit de détection de tension (217) est en outre configuré pour :
comparer la tension de la première broche avec le premier seuil prédéfini, et envoyer un résultat de comparaison au processeur (214),
dans lequel le circuit de détection de tension (217) comprend :
une borne d'entrée du circuit de détection de tension (217) configurée pour connecter la première broche, et une borne de sortie configurée pour connecter le processeur (214) ;
dans lequel la borne d'entrée (IN01) du circuit de détection de tension (217) est connectée à une première borne d'entrée d'un comparateur par l'intermédiaire d'une quatrième résistance, une seconde borne d'entrée du comparateur est connectée à une borne de tension de référence, une tension au niveau de la borne de tension de référence est le premier seuil prédéfini, et une borne de sortie du comparateur est utilisée comme borne de sortie du circuit de détection de tension (217) ; et
le comparateur est configuré pour : comparer les tensions reçues par la première borne d'entrée et la seconde borne d'entrée, et sortir le résultat de la comparaison.

2. Le dispositif électronique selon la revendication 1, dans lequel le dispositif électronique (210) comprend en outre un circuit de traitement de protocole (213), le circuit de traitement de protocole (213) étant respectivement connecté à une troisième broche de l'interface (211) et au processeur (214), la troisième broche étant configurée pour transmettre un signal de données ; et
lors de l'envoi de la seconde valeur de tension au dispositif d'alimentation électrique (220), le processeur (214) est en outre configuré pour : envoyer la seconde valeur de tension au circuit de traitement de protocole (213) ;
le circuit de traitement de protocole (213) étant configuré pour : envoyer la seconde valeur de tension au dispositif d'alimentation électrique (220) par l'intermédiaire de la troisième broche de l'interface (211).

3. Le dispositif électronique (210) selon la revendication 1, dans lequel le comparateur est situé dans une unité de gestion de l'alimentation, PMU, (215) du dispositif électronique (210), ou situé dans le processeur (214).

4. Système de charge, comprenant un dispositif d'alimentation électrique (220) et le dispositif électronique (210) selon l'une quelconque des revendications 1 à 3.
